# EUROPEAN PATENT SPECIFICATION

(11) **EP 2 866 233 B1**
(45) Date of publication and mention of the grant of the patent: **19.12.2018**
(21) Application number: 14275220.3
(22) Date of filing: 27.10.2014
(51) Int. Cl.: H01F 27/28, H01F 30/04

(54) **Transformer, power supply device, and display device including the same**
Transformator, Stromversorgungsvorrichtung und Anzeigevorrichtung damit
Transformateur, dispositif d'alimentation électrique et dispositif d'affichage comprenant celui-ci

(30) Priority: 28.10.2013 KR 20130128771
(43) Date of publication of application: 29.04.2015
(73) Proprietor: Samsung Electro-Mechanics Co., Ltd., Gyeonggi-do (KR)
(72) Inventor: Jeong, In Wha, Gyeonggi-Do (KR); Kim, Hugh, Gyeonggi-Do (KR); Kim, Hak Ryong, Gyeonggi-Do (KR); Kim, Myeong Chan, Gyeonggi-Do (KR)
(74) Representative: Potter Clarkson LLP

(56) References cited:
- WO-A2-2007/138525
- KR-A- 20090 128 260
- US-A1- 2002 167 783
- US-A1- 2005 128 038
- US-A1- 2010 244 579
- US-A1- 2011 148 549

## Description

### CROSS-REFERENCE TO RELATED APPLICATION

This application claims priority to Korean Patent Application No. 10-2013-0128771 filed on October 28, 2013, with the Korean Intellectual Property Office.

### TECHNICAL FIELD

The present disclosure relates to a coreless transformer having a reduced volume, a power supply device, and a display device including the same.

### BACKGROUND

An electrical or electronic device refers to a device operated using electricity as an energy source.

In order to operate an electrical or electronic device, electrical power needs to be supplied, and unless a device generates power by itself to be self-powering, a device is inevitably provided with electrical power from an external source.

In this regard, in order for an electrical or electronic device to receive power from an external source, a power supply device, as described in the related art document listed below, is required to provide driving power to the electrical or electronic device from external power supply facilities.

Consumers of electrical or electronic devices employing a power supply device prefer slim products having relatively long lifespans.

In order to meet consumer demand, power supply devices need to be thinner and have longer lifespans.

However, due to capacity of an electrolytic capacitor stabilizing input power or output power and a volume of a transformer, it may be difficult for products of power supply devices to be thinner, and lifespans of power supply devices are determined by electrolytic capacitors.

### [Related Art Document]

(Patent Document 1) Korean Patent Laid-Open Publication No. 2009-0128260
(Patent Document 2) US 2005/128038 A1
(Patent Document 3) WO 2007/138525 A2

### SUMMARY

An aspect of the present disclosure may provide a coreless transformer able to be used to convert power in a power supply device, a power supply device, and a display device including the same.

The present invention relates to a coreless transformer according to claim 1.

The support unit may include the plurality of primary coils and the at least one secondary coil therein.

The plurality of primary coils may be respectively disposed at the same distance from the at least one secondary coil.

The support unit may include at least one board, and the plurality of primary coils may be disposed on one surface of the at least one board, and the at least one secondary coil may be disposed in the other surface, opposing the one surface of the at least one board.

The support unit may include a first board and a second board laminated on the first board, and the plurality of primary coils may be disposed on one surface of the first board and the at least one secondary coil may be disposed on one surface of the second board.

The at least one magnetic sheet may be disposed between the first board and the second board for suppressing leakage of magnetic flux transmitted from the plurality of primary coils to the at least one secondary coil.

The support unit may further include a molding part fixing the first board and the second board.

A direction in which a lead wire of the plurality of primary coils is led out and a direction in which a lead wire of the at least one secondary coil is led out may be opposite to each other.

The support unit may include a plurality of boards, and the plurality of primary coils may be dividedly disposed such that a first divided portion of the plurality of primary coil is disposed in a first portion of the plurality of boards and a second divided portion of the plurality of primary coils is disposed in a second portion of the plurality of boards.

The support unit may include a plurality of boards, and the at least one secondary coil may be dividedly disposed such that a first divided portion of the at least one secondary coil is disposed in a first portion of the plurality of boards and a second divided portion of the at least one secondary coil is disposed in a second portion of the plurality of boards.

The support unit may include a first board and a second board laminated on the first board, and the plurality of primary coils may be dividedly disposed on one surface and the other surface of the first board, and the at least one secondary coil may be dividedly disposed on one surface and the other surface of the second board.

An example which is not part of the present invention discloses a transformer converting power input to a primary side and delivering the converted power to a secondary side insulated from the primary side. The transformer includes at least one primary coil, at least one secondary coil, and a support unit. The at least one primary coil delivers power according to a power conversion switching frequency at which input power is switched to be converted. The at least one secondary coil is spaced apart from the at least one primary coil and converts power from the at least one primary coil. The support unit includes the at least one primary coil and the at least one secondary coil therein, maintaining a distance between the at least one primary coil and the at least one secondary coil, and transmitting magnetic flux from the at least one primary coil to the at least one secondary coil. A power conversion ratio is determined according to magnetic flux transmitted directly from the at least one primary coil to the at least one secondary coil.

The center of the at least one primary coil and that of the at least one secondary coil may be aligned.

An example which is not part of the present invention discloses a transformer converting power input to a primary side and delivering the converted power to a secondary side insulated from the primary side. The transformer includes at least one primary coil, at least one secondary coil and a support unit. The at least one primary coil delivers power according to a power conversion switching frequency at which input power is switched to be converted, in a resonant manner. The at least one secondary coil is spaced apart from the at least one primary coil and converts power from the at least one primary coil. The support unit maintains a distance between the at least one primary coil and the at least one secondary coil. A power conversion ratio is determined according to magnetic coupling of the at least one primary coil and the at least one secondary coil.

The at least one secondary coil may resonate to receive power from the at least one primary coil, and resonant frequencies of the at least one primary coil and resonant frequencies of the at least one secondary coil may be identical to each other.

An example which is not part of the present invention discloses a power supply device including a transformer, and a resonance unit. The transformer includes at least one primary coil delivering power according to a power conversion switching frequency at which input power is switched to be converted, in a resonant manner, at least one secondary coil spaced apart from the at least one primary coil and converting power from the at least one primary coil, and a support unit maintaining a distance between the at least one primary coil and the at least one secondary coil, and determining a power conversion ratio according to magnetic coupling of the at least one primary coil and the at least one secondary coil. The resonance unit is connected to at least one of one end of the at least one primary coil and one end of the at least one secondary coil to resonate.

The power supply device may further include a resonance unit connected to at least one of one end of the at least one primary coil and one end of the at least one secondary coil. The resonance unit may include at least one resonant capacitor connected to one end of a corresponding coil in series. The resonance unit may include at least one resonant capacitor connected to both ends of a corresponding coil in parallel.

An example which is not part of the present invention discloses a power supply device including a power conversion unit and a power supply unit. The power conversion unit includes a transformer, at least one secondary coil, and a support unit. The transformer includes at least one primary coil delivering power according to a power conversion switching frequency at which input power is switched to be converted. The at least one secondary coil is spaced apart from the at least one primary coil and converts power from the at least one primary coil. The support unit maintains a distance between the at least one primary coil and the at least one secondary coil, determines a power conversion ratio according to a distance between the at least one primary coil and the at least one secondary coil, and converts the input power into first power according to the power conversion ratio. The power supply unit supplies the first power from the power conversion unit to the outside according to a pre-set method.

The power supply unit may supply power to the outside according to at least one of a wired method and a wireless method.

The power conversion unit may further include a resonance unit connected to the at least one primary coil or the at least one secondary coil.

The resonance unit may include at least one of one resonant capacitor connected to an end of a corresponding coil in series and the other resonant capacitor connected to both ends of a corresponding coil in parallel.

The transformer may include a plurality of primary coils.

The power conversion unit may further include a plurality of switches respectively connected to the plurality of primary coils, and the plurality of switches may respectively switch input power in an interleaved manner.

The transformer may determine a power conversion ratio according to magnetic flux directly transmitted from the at least one primary coil to the at least one secondary coil or magnetic coupling of the at least one primary coil and the at least one secondary coil.

The power supply unit may include a plurality of wired power supply units that are connected to an output terminal of the power conversion unit in parallel and output power according to a wired method.

The power supply device may further include a DC/DC conversion unit performing DC/DC converting on the first power from the power conversion unit and supplying the converted power to the power supply unit.

An example which is not part of the present invention discloses a power supply device including a power conversion unit and a power supply unit. The power conversion unit includes first and second switches, a transformer, at least one secondary coil and a support unit. The first and second switches switch input power in an interleaved manner. The transformer includes at least first and second primary coils delivering power according to power conversion switching frequencies with which the first and second switches switch the input power. The at least one secondary coil is spaced apart from the first and second primary coils and converts power from the first and second primary coils. The support unit maintains a distance between the first and second primary coils and the at least one secondary coil, determines a power conversion ratio according to distances between the first and second primary coils and the at least one secondary coil, and converts the input power into first power according to the power conversion ratio. The power supply unit supplies the first power from the power conversion unit to the outside according to a pre-set method.

An example which is not part of the present invention discloses a power supply device including a power conversion unit, a wired power supply unit, and a wireless power supply unit. The power conversion unit switches input power in an interleaved manner to convert the input power into first power. The wired power supply unit supplies the first power from the power conversion unit to the outside according to a wired method. The wireless power supply unit switches the first power from the power conversion unit with at least one of a plurality of resonant frequencies and wirelessly transmitting the switched power.

The power conversion unit may include first and second switches switching input power in an interleaved manner, and a transformer including at least first and second primary coils delivering power according to power conversion switching frequencies with which the first and second switches switch the input power, at least one secondary coil spaced apart from the first and second primary coils and converting power from the first and second primary coils, and a support unit maintaining a distance between the first and second primary coils and the at least one secondary coil, and determining a power conversion ratio according to distances between the first and second primary coils and the at least one secondary coil.

The wireless power supply unit may include a switching unit having at least one switch switching the first power from the power conversion unit; and a resonance unit resonating according to a switching operation of the switching unit to wirelessly transmit switched power.

The switching unit may include a half-bridge switch having first and second switches.

The resonance unit may include a first capacitor connected to a node between the first and second switches of the half-bridge switch, and a first primary coil unit connected to the first capacitor in series.

The first capacitor and the first primary coil unit may resonate according to a switching frequency of the half-bridge switch.

The wireless power supply unit may wirelessly transmit power according to at least one of magnetic resonance and magnetic coupling.

The claimed invention may be used with or form part of a display device including a power supply device, a power supply unit and a display unit. The power supply device includes a power conversion unit including a transformer including at least one primary coil delivering power according to a power conversion switching frequency at which input power is switched to be converted, at least one secondary coil spaced apart from the at least one primary coil and converting power from the at least one primary coil, and a support unit maintaining a distance between the at least one primary coil and the at least one secondary coil. A power conversion ratio is determined according to a distance between the at least one primary coil and the at least one secondary coil. The input power is converted into first power according to the power conversion ratio. The power supply unit supplies the first power from the power conversion unit according to a pre-set method. The display unit operates upon receiving power from the power supply device.

Still another aspect of the present disclosure encompasses a coreless transformer including a plurality of primary coils, a single secondary coil, and a support unit. The plurality of primary coils deliver power according to a power conversion switching frequency at which input power is switched to be converted. The single secondary coil is spaced apart from the plurality of primary coils and converts power from the plurality of primary coils. The support unit maintains a distance between the plurality of primary coils and the single secondary coil. A power conversion ratio is determined based on the distance between the plurality of primary coils and the single secondary coil.

### BRIEF DESCRIPTION OF DRAWINGS

The above and other aspects, features and other advantages of the present disclosure will be more clearly understood from the following detailed description taken in conjunction with the accompanying drawings, in which like reference characters may refer to the same or similar parts throughout the different views. The drawings are not necessarily to scale, emphasis instead being placed upon illustrating the principles of the embodiments of the present inventive concept. In the drawings, the thickness of layers and regions may be exaggerated for clarity.
FIGS. 1A through 1G are views illustrating utilization examples of a power supply device which is not part of the present invention.
FIGS. 2A through 2F are block diagrams illustrating schematic examples of a power supply device which is not part of the present invention.
FIGS. 3A through 3C are circuit diagrams schematically illustrating examples of power supply devices which are not part of the present invention.
FIGS. 4A through 4D are circuit diagrams schematically illustrating examples of resonance units employed in the examples of the power supply devices which are not part of the present invention.
FIGS. 5A through 5F are graphs illustrating operation waveforms of the power supply device of the example of the power supply device according to the example illustrated in FIG. 3C.
FIGS. 6A through 6J are views schematically illustrating examples which are not part of the present invention and embodiments of a coreless transformer according to the present invention employed in a power supply device.

### DETAILED DESCRIPTION

Hereinafter, exemplary embodiments of the present disclosure will be described in detail with reference to the accompanying drawings.

The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

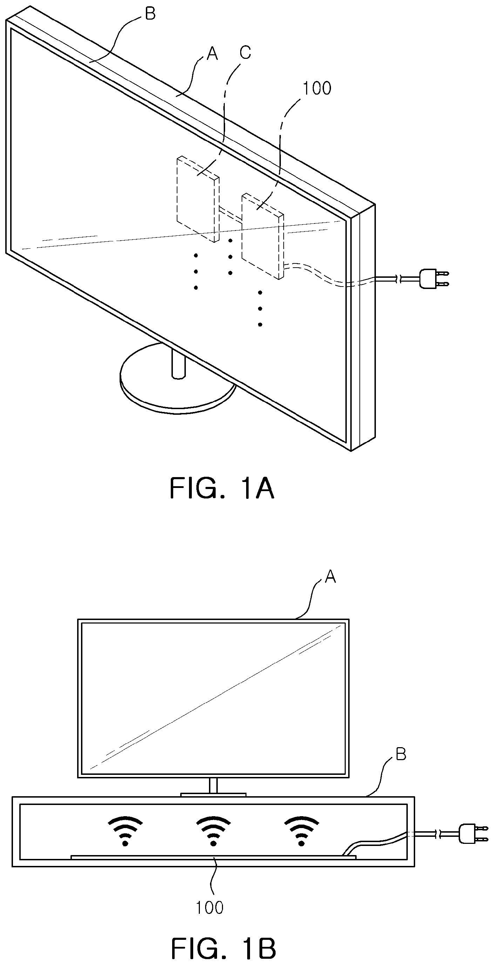

FIGS. 1A through 1G are views illustrating utilization examples of a power supply device.

Referring to FIGS. 1A and 1B, a power supply device 100 may be employed within or outside of an electronic device A. The power supply device 100 of the electronic device A may supply a peripheral circuit unit C or a main operating circuit unit B within the electronic device A.

In this case, as illustrated in FIG. 1A, the electronic device A may be a display device, the main operating circuit unit B may be a display unit B displaying a screen, and the peripheral circuit unit C may perform a peripheral operation of the display unit B, namely, various peripheral operations such as receiving a sound or a user movement, or the like.

In addition, as illustrated in FIG. 1B, the power supply device 100 may be employed outside of the display device A. In this case, the power supply device 100 may be disposed in a support unit B (e.g., a stand) of the display device 100 to supply power to the display device A in a wired manner or wirelessly.

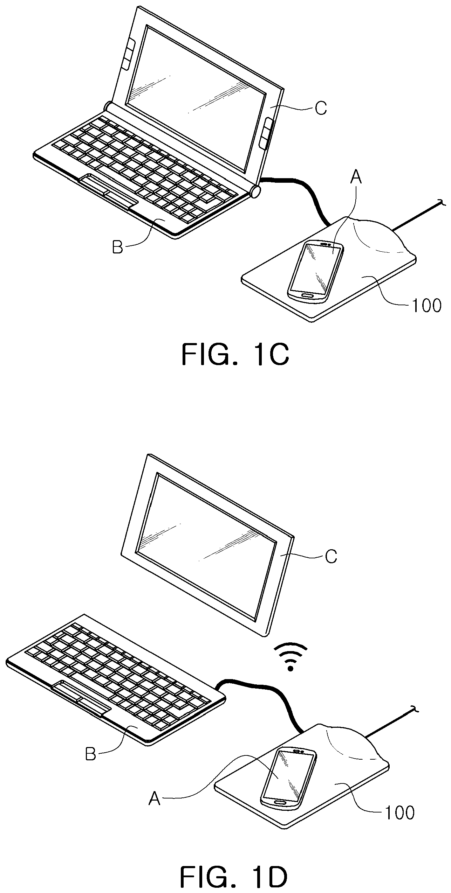

Referring to FIGS. 1C through 1G, the power supply device 100 may be a power supply device supplying power through a fixed line (see FIGS. 1C and 1D). While supplying power to a laptop computer body B and display C through a fixed line, the power supply device 100 may simultaneously supply power to a cellular phone A wirelessly (see FIG. 1D). In this case, the power supply device 100 according to an exemplary embodiment of the present disclosure may be a wireless charging pad supplying power to the cellular phone A.

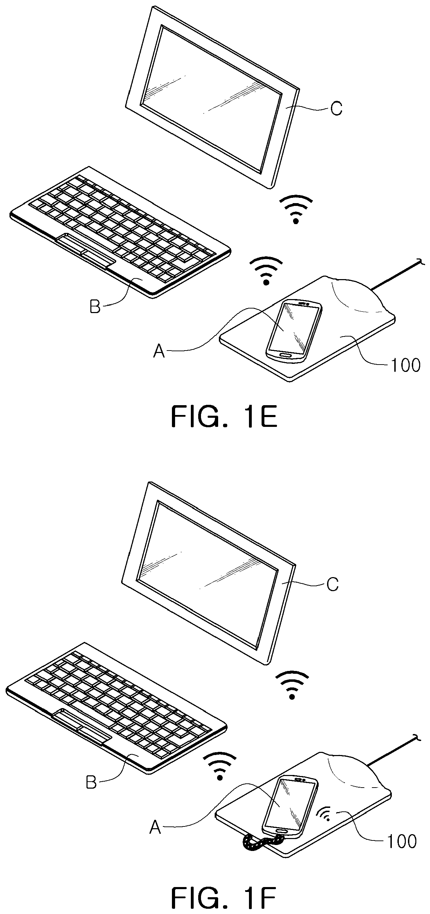

When the body B and display C of the laptop computer are separated, the power supply device 100 may supply power to the display C wirelessly, while supplying power to the body B through a fixed line (see FIG. 1D). Also, the power supply device 100 may supply power to both the body B and the display C wirelessly (see FIGS. 1E and 1F).

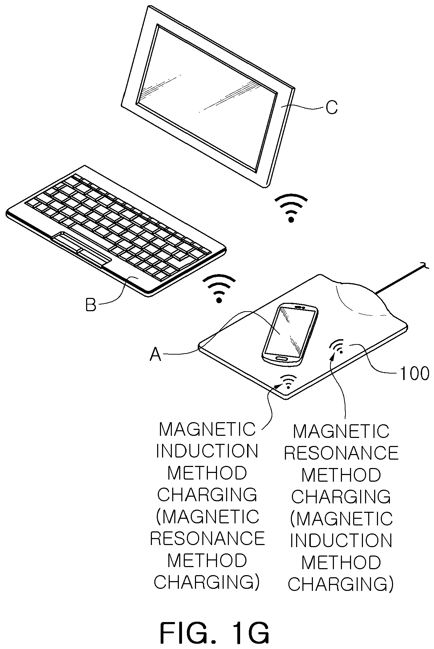

Also, the power supply device 100 may supply power to the cellular phone A in a wired manner (see FIG. 1F) or according to a magnetic resonance method or a magnetic induction method (see FIG. 1G) in order to perform quick charging or supplement insufficient power.

When a plurality of primary coils are provided, the plurality of primary coils may wirelessly provide power according to the magnetic resonance method or the magnetic induction method, and in this case, all of the plurality of primary coils may transmit power to the body B and the display C, as well as to the cellular phone A, according to the magnetic resonance method or the magnetic induction method.

Hereinafter, a configuration of the power supply device 100 will be described with reference to the accompanying drawings.

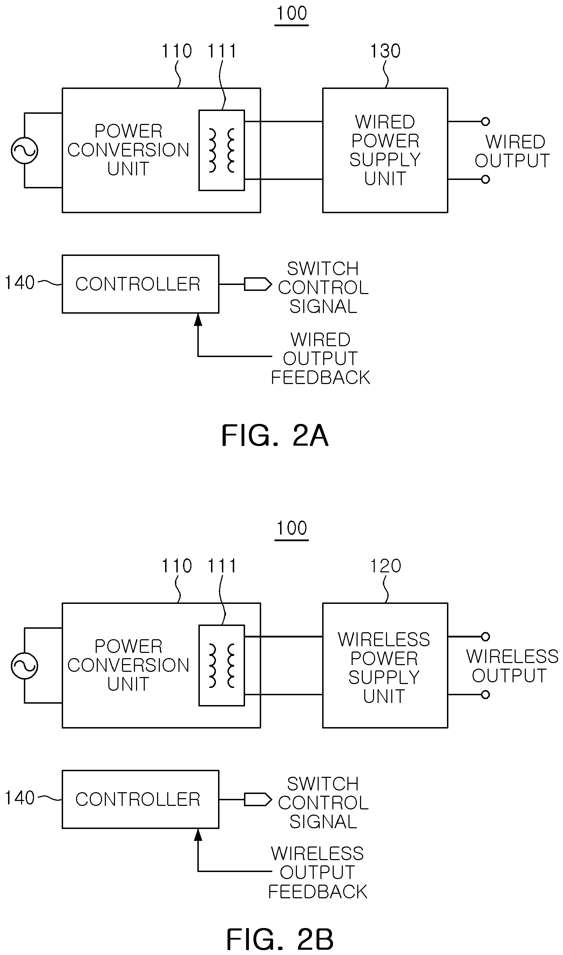

FIGS. 2A through 2F are block diagrams illustrating schematic examples of a power supply device 100.

First, as illustrated in FIGS. 2A and 2B, the power supply device 100 according to an exemplary embodiment of the present disclosure may include a power conversion unit 110 converting input power or alternating current (AC) power into first power, and a power supply unit 120 or a power supply unit 130, transmitting the first power from the power conversion unit 110 according to a pre-set method.

The power supply unit 130 may be a wired power supply unit transmitting the first power from the power conversion unit 110 outwardly through a fixed line. The power supply unit 120 may be a wireless power supply unit wirelessly transmitting the first power from the power conversion unit 110 outwardly.

The wireless power supply unit may transmit the first power from the power conversion unit 110 outwardly according to a magnetic induction method and/or a magnetic resonance method.

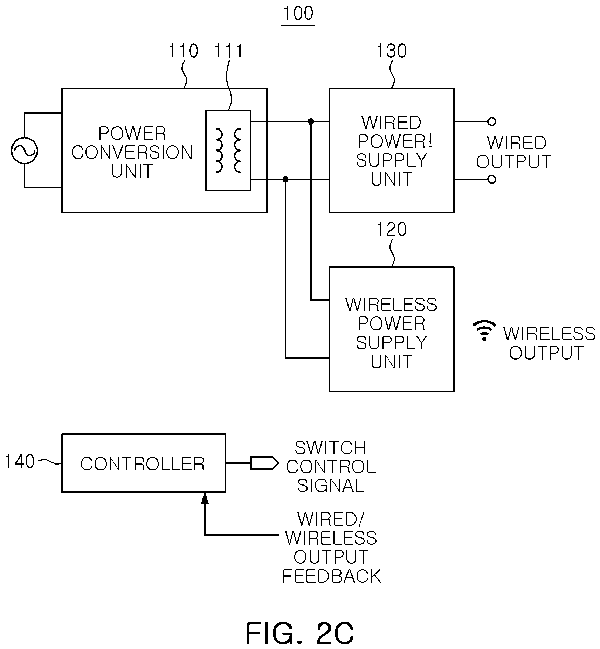

The power supply device 100 according to an exemplary embodiment of the present disclosure may include the wireless power supply unit 120 switching the first power and transmitting the same wirelessly. Referring to FIG. 2C, the power supply device 100 may further include the wired power supply unit 130 transmitting the first power from the power conversion unit 110 in a wired manner, and may further include a controller 140 controlling wireless transmission of the wireless power supply unit 120.

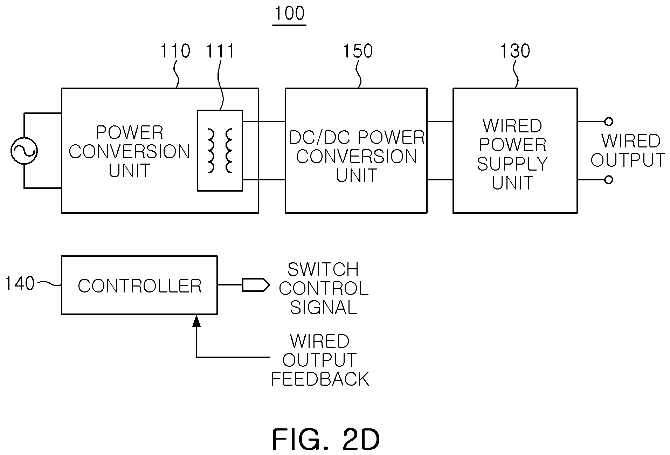

In addition, as illustrated in FIG. 2D, the power supply device 100 according to an exemplary embodiment of the present disclosure may further include a DC/DC power conversion unit 150 performing DC/DC conversion on power transmitted from the power conversion unit 110.

The controller 140 may receive feedback from an output and control, based on the feedback output, switching of the power conversion unit 110 or power switching of the power supply units 120 and 130.

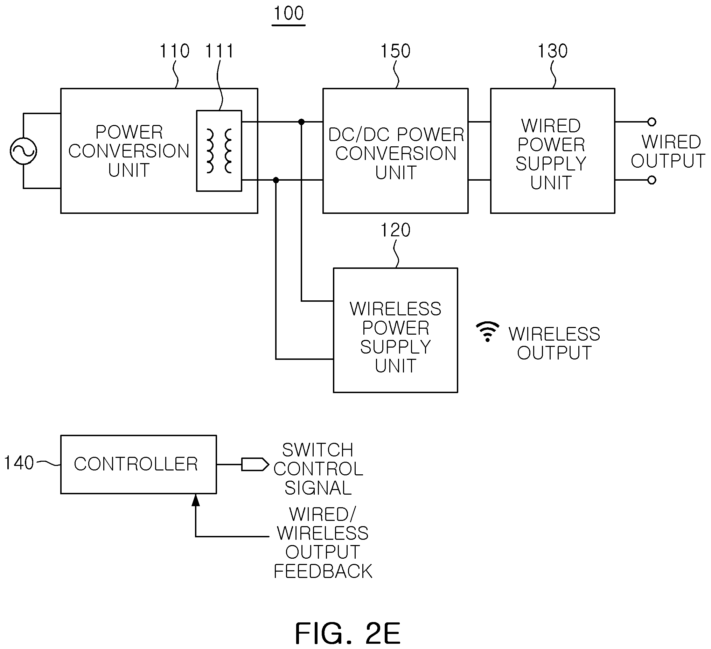

In addition, as illustrated in FIG. 2C, the power supply device 100 may employ both the wired power supply unit 130 and the wireless power supply unit 120, and as illustrated in FIG. 2E, the power supply device 100 may further include the DC/DC power conversion unit 150 performing DC/DC conversion on power transmitted to the power conversion unit 110.

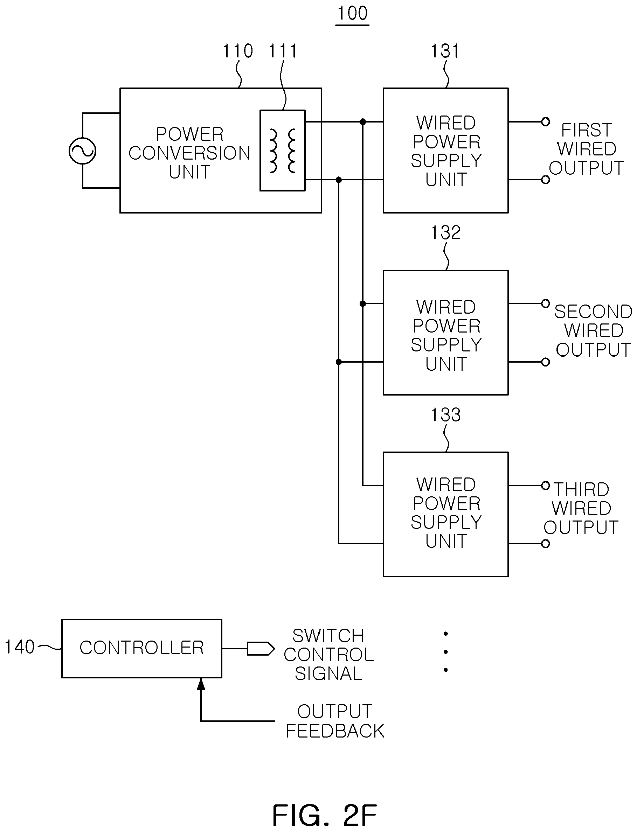

Also, in order to supply power to a plurality of components such as the display unit B, the peripheral circuit unit C, and the like, within the display device A as illustrated in FIG. 1A, the power supply device 100 may include a plurality of wired power supply units 131, 132, and 133 respectively connected to an output terminal of the power conversion unit 110 in parallel (see FIG. 2F). Power outputted from the plurality of wired power supply units 131, 132, and 133 may be the same or different.

The power conversion unit 110 may include a coreless transformer 111, having a reduced volume. The coreless transformer 111 may have at least one primary coil and at least one secondary coil in a single transformer structure, and a power conversion ratio may be formed by a distance between the at least one primary coil and the at least one secondary coil.

In addition, a power conversion ratio may be determined based on magnetic coupling of the at least one primary coil and the at least one secondary coil, a magnitude of magnetic flux transmitted from the at least one primary coil to the at least one secondary coil, number of turns of the at least one primary coil and the at least one secondary coil, and the like.

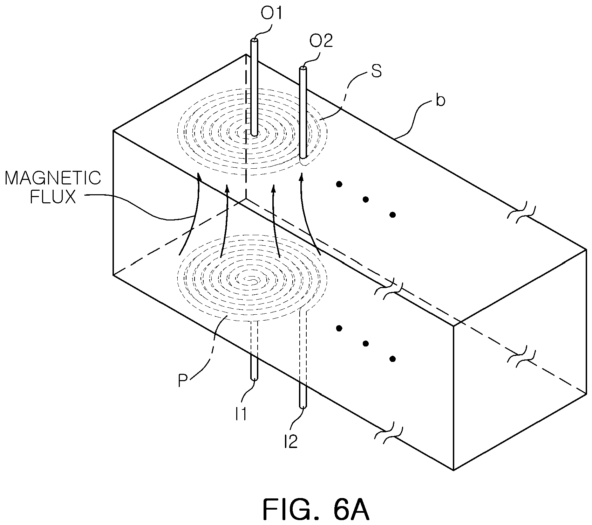

The aforementioned coreless transformer will be described in detail with reference to FIGS. 6A through 6J.

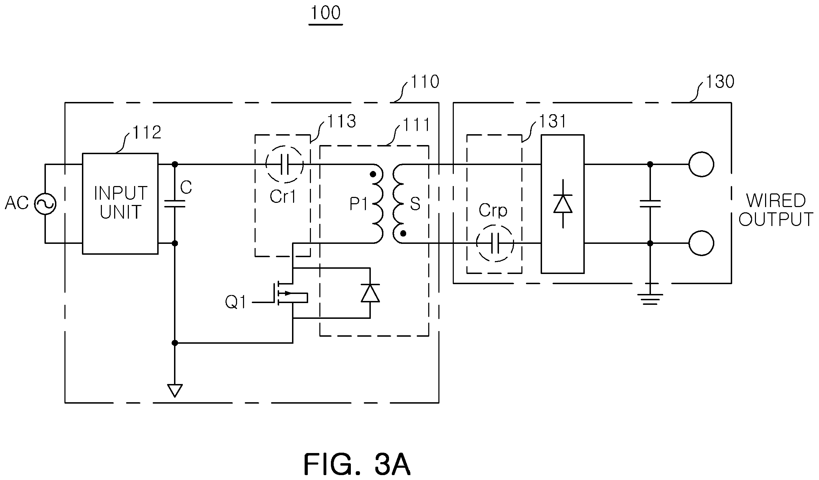

FIGS. 3A through 3C are circuit diagrams schematically illustrating examples of power supply devices of the present disclosure.

Referring to FIG. 3A, a power conversion unit 110 of a power supply device according to an example may include a transformer 111, an input unit 112, a resonance unit 113, and a switch Q1.

The input unit 112 may rectify and smooth input power AC and cancel electromagnetic interference.

One end of a primary coil P1 of the transformer 111 may be connected to the input unit 112 to receive power and the other end thereof may be connected to the switch Q1 and transmit power switched, according to a switching operation of the switch Q1, to a secondary coil S.

The resonance unit 113 may be formed between the input unit 112 and one end of the primary coil P1. The resonance unit 113 may include a resonant capacitor Cr1 to resonate with the primary coil P1 when power is transmitted to the primary coil P1 of the transformer 111.

Power from the input unit 112 may be stabilized through a capacitor C and subsequently delivered to the transformer 111.

The wired power supply unit 130 may supply power from the secondary coil S outwardly through a fixed line. The wired power supply unit 130 may include a resonance unit 131 formed between one end of the secondary coil S and an output terminal thereof. The resonance unit 131 may include a resonant capacitor Crp to resonate with the secondary coil S when power is received from the primary coil P1 of the transformer 111.

Resonant frequencies at which the resonant capacitor Cr1 and the primary coil P1 of the transformer 111 resonate and resonant frequencies at which the resonant capacitor Crp and the secondary coil S of the transformer 111 resonate may be identical.

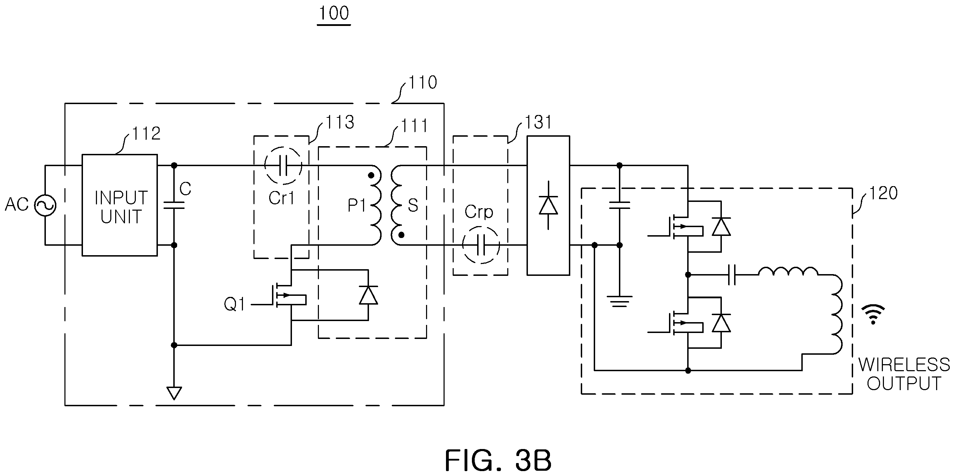

Referring to FIG. 3B, a power supply device 100 may include the wireless power supply unit 120. The wireless power supply unit 120 may wirelessly transmit power outwardly through a magnetic induction method or a magnetic resonance method based on a resonance frequency according to switching of power from the secondary coil S, and to this end, LC resonance based on an inductor and a capacitor may be provided. Similarly, a resonance unit 131 may be formed between one end of a secondary coil S and an output terminal. The resonance unit 131 may include a resonant capacitor Crp to resonate with the secondary coil S when receiving power transmitted from a primary coil P1 of a transformer 111.

Resonant frequencies at which the resonant capacitor Cr1 and the primary coil P1 of the transformer 111 resonate and resonant frequencies at which the resonant capacitor Crp and the secondary coil S of the transformer 111 resonate may be identical.

The power conversion unit 110 of FIG. 3B is identical to that of FIG. 3A, so a detailed description thereof will be omitted.

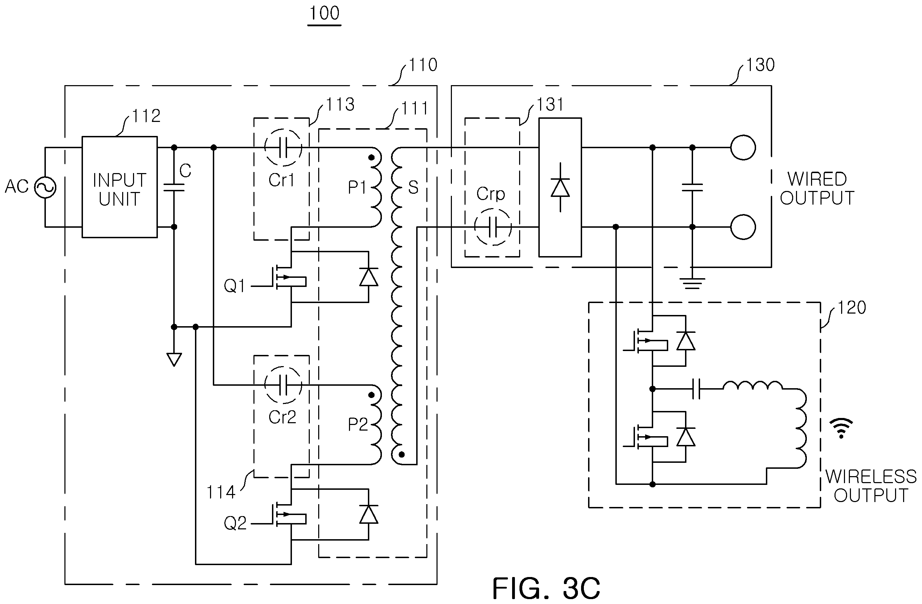

Referring to FIG. 3C, a power supply device 100 may include a wireless power supply unit 120 and a wired power supply unit 130. The wireless power supply unit 120 and the wired power supply unit 130 may respectively receive power from a secondary coil S and supply the received power outwardly through a fixed line and wirelessly, respectively.

In the power conversion unit 110, power from an input unit 112 may be switched in an interleaved manner, and to this end, a transformer 111 may include first and second primary coils P1 and P2. First and second switches Q1 and Q2 may be connected to one ends of the first and second primary coils P1 and P2 to switch power, respectively.

Similarly, resonance units 113 and 114 may be respectively formed between the input unit 112 and the other ends of the primary coils P1 and P2 of the transformer 111. The resonance units 113 and 114 may respectively include resonant capacitors Cr1 and Cr2 to resonate with the primary coils P1 and P2 of the transformer 111 when power is transmitted to the transformer 111. LC resonant frequencies between the primary coils P1 and P2 and the resonance units 113 and 114 may be identical or different to each other. Also, an LC resonant frequency between the secondary coil S and the resonance unit 131 may be identical to respective LC resonant frequencies between the primary coils P1 and P2 and the resonance units 113 and 114.

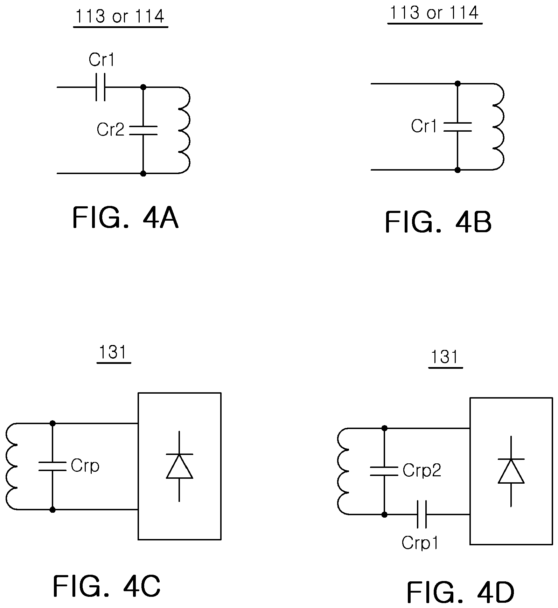

FIGS. 4A through 4D are circuit diagrams schematically illustrating examples of resonance units employed in examples of the power supply devices.

Referring to FIGS. 4A through 4D, the resonance units 113, 114, and 131 may each include a resonant capacitor (e.g., Cr1, Cr2, Crp, Crp1, or Crp2) connected to one end of a corresponding coil in series or connected to both ends of a corresponding coil in parallel.

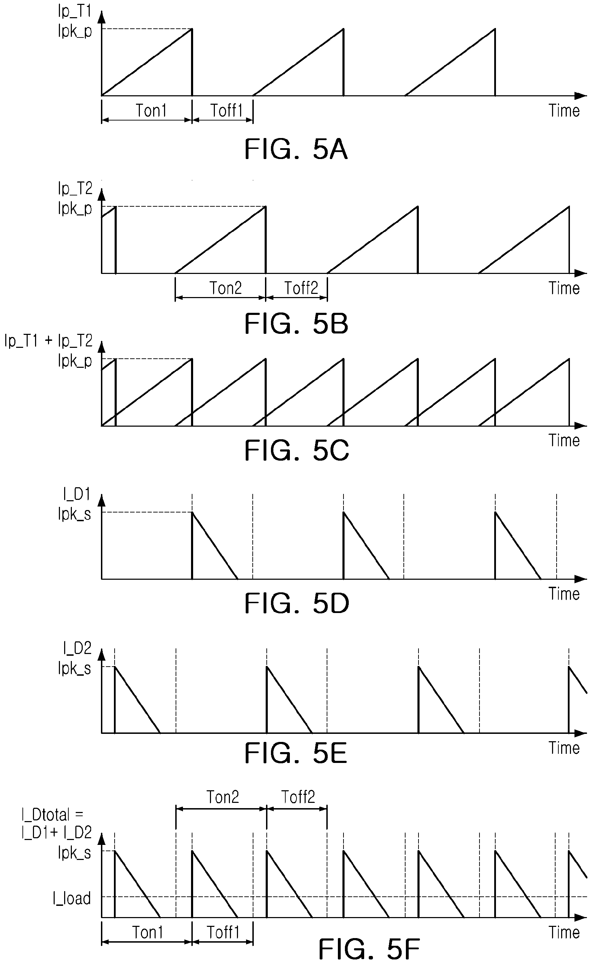

FIG. 5 is a graph illustrating operation waveforms of the power supply device of the example of the power supply device illustrated in FIG. 3C.

Referring to FIGS. 5A-5F, an input current and an output current generated as first and second switches Q1 and Q2 are alternately switched are identical to those of a case in which a single switch is switched, on average, while ripple is reduced. Thus, a capacitance value of the capacitor C at the rear of the input unit 112 may be reduced, and thus, a volume of the capacitor C may be reduced. According to circumstances, an electrolytic capacitor at the rear of the input unit 112 may be replaced with a film capacitor, further reducing a size of a product. Also, a capacitance value of a capacitor at the output terminal may be reduced, reducing a volume of the capacitor, and thus, a size of a product may be further reduced. Similarly, according to circumstances, an electrolytic capacitor at the output terminal may be replaced with a film capacitor, further reducing a size of a product.

FIGS. 6A through 6J are views schematically illustrating examples which are not part of the present invention and embodiments of a coreless transformer according to the present invention employed in a power supply device.

Referring to FIG. 6A, a transformer employed in a power supply device according to an example which is not part of the present invention may include at least one primary coil P and at least one secondary coil S, and since a core guiding magnetic flux is not employed, a volume of the transformer may be reduced. Accordingly, leakage inductance may be minimized to transmit magnetic flux at the maximum level. In addition, since leakage inductance is minimized, a spike voltage generated in case of power conversion switching may be reduced, eliminating the necessity of a snubber circuit, and thus, a circuit area and manufacturing costs may be reduced. Also, without a core, a saturated state of a core is eliminated, and thus, even though a linear voltage is applied to the primary coil, power may be normally converted.

Also, the at least one primary coil P may transmit power to the at least one secondary coil S, and a power conversion ratio between the at least one primary coil P and the at least one secondary coil S may be determined by an amount of magnetic flux directly transmitted from the at least one primary coil P to the at least one secondary coil S. The primary coil P and the secondary coil S may be aligned such that the centers thereof are disposed at the same position.

In addition, the power conversion ratio may be determined based on magnetic coupling of the at least one primary coil P and the at least one secondary coil S, a magnitude of magnetic flux transmitted from the at least one primary coil P to the at least one secondary coil S, a number of turns of the at least one primary coil P and the at least one secondary coil S, and the like.

The primary coil P and the secondary coil S may be spaced apart from one another by a predetermined interval therebetween and may be provided in plural. In consideration of the power conversion ratio determined based on an amount of directly transmitted magnetic flux, a plurality of primary coils P and a plurality of secondary coils S may be disposed to be parallel with and spaced apart from one another by a predetermined interval therebetween. In addition, the primary coils P and the secondary coils S may be variously configured as windings, patterns, or the like.

The primary coil P and the secondary coil S may be molded by a support unit b to maintain the space therebetween. In this case, the support unit b may be formed of paste to fix the primary coil P and the secondary coil S and suppress leakage of magnetic flux.

The support unit b is illustrated to have a rectangular shape for the description purpose, but it may also have various other shapes such as a cylindrical shape.

The primary coil P may have input power lead wires I1 and I2 to which power is input, and the secondary coil S may have output power lead wires O1 and O2. In order not to interfere with magnetic flux transmitted directly from the primary coil P to the secondary coil S, the input power lead wires I1 and I2 and the output power lead wires O1 and O2 may be led out in the mutually opposite directions.

The input power lead wires I1 and I2 and the output power lead wires O1 and O2 may be formed vertically in the mutually opposite directions, and since coils are not formed to overlap, turns of coils may be advantageously insulated.

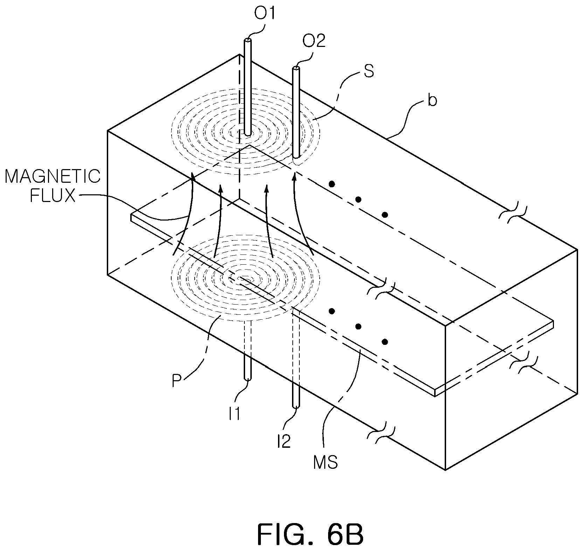

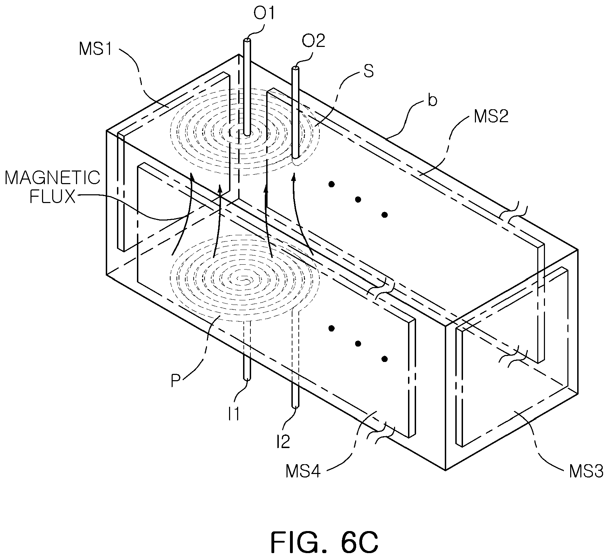

Referring to FIGS. 6B and 6C, a magnetic sheet MS may be formed between a primary coil P and a secondary coil S in order to prevent leakage of magnetic flux. A plurality of magnetic sheets MS1, MS2, MS3, and MS4 (see FIG. 6C) may be disposed along the circumference or perimeter of the support unit b.

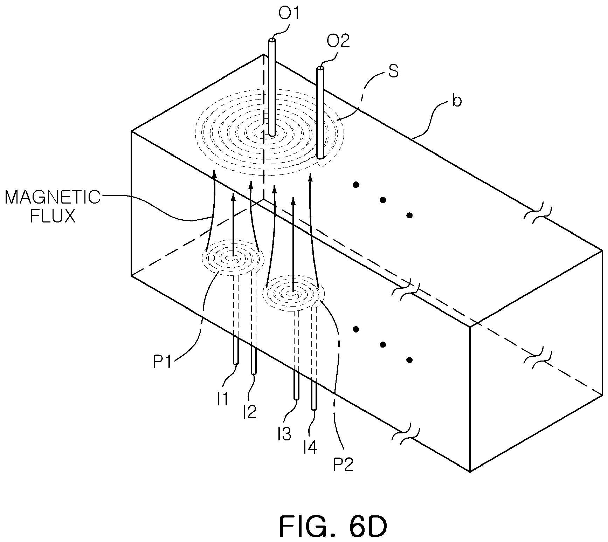

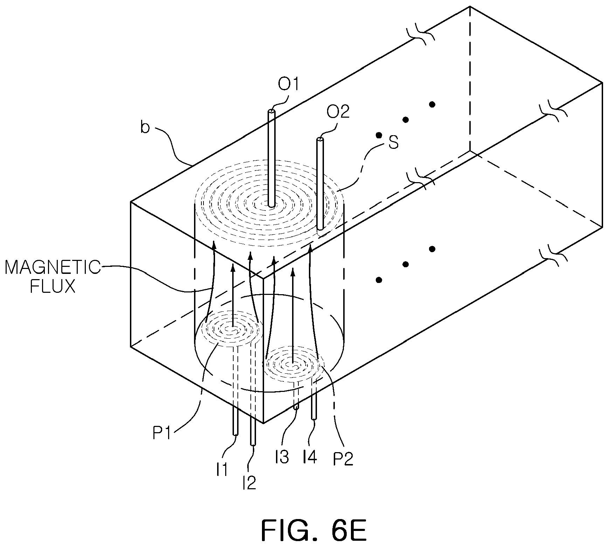

Referring to FIGS. 6D and 6E, in case of switching power in an interleaved manner, a transformer may include first and second primary coils P1 and P2, their input power lead wires I1, 12, 13 and 14, and at least one secondary coil S. In consideration of a power conversion ratio determined based on an amount of directly transmitted magnetic flux, an area of the at least one secondary coil S may be equal to or greater than areas of the first and second primary coils P1 and P2 within the support unit b.

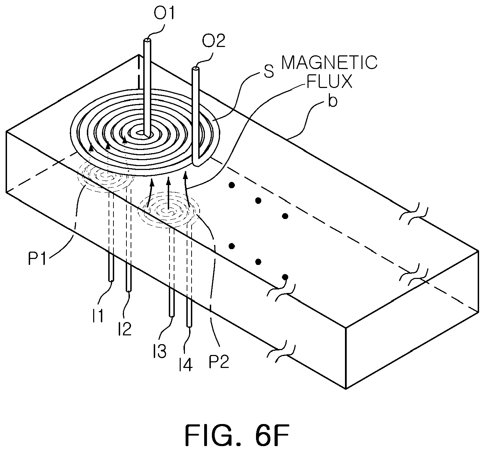

Referring to FIG. 6F, primary coils P1 and P2 and at least one secondary coil S may be formed in at least one board b. Here, the primary coils P1 and P2 may be formed on one surface of the board b and the at least one secondary coil S may be formed in the other surface of the board b.

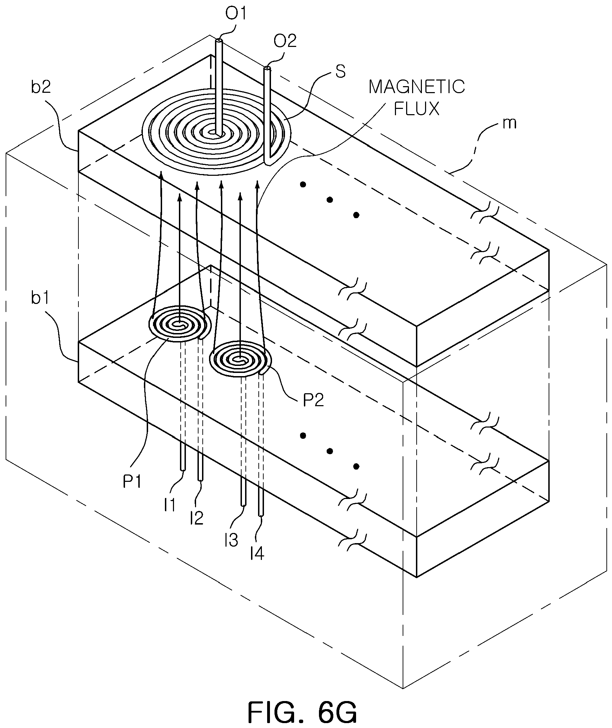

Referring to FIG. 6G, primary coils P1 and P2 and at least one secondary coil S may be formed in boards b1 and b2, respectively, and here, the primary coils P1 and P2 may be formed on one surface of the first board b1 and the at least one secondary coil S may be formed on one surface of the second board b2.

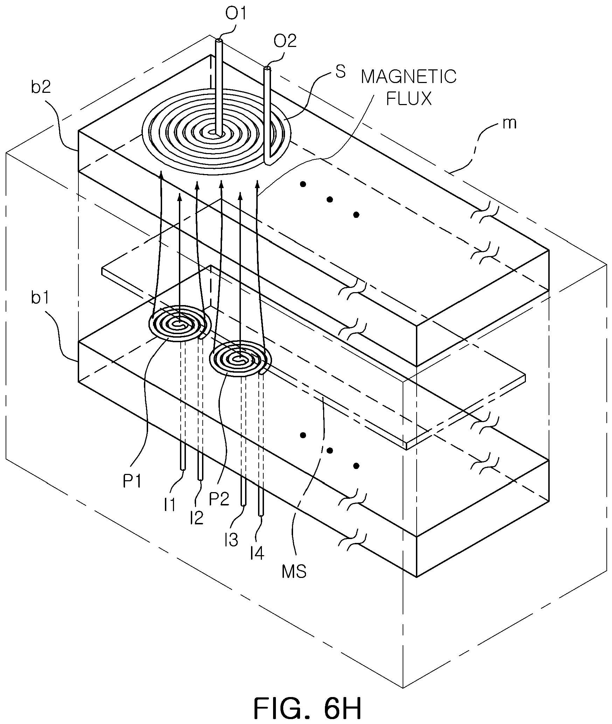

The first board b1 and the second board b2 may be laminated, and a molding part m may be provided to maintain a distance between the primary coils P1 and P2 and the at least one secondary coil S and fix the first board b1 and the second board b2. In addition, referring to FIG. 6H, a magnetic sheet MS may be provided between the first board b1 and the second board b2.

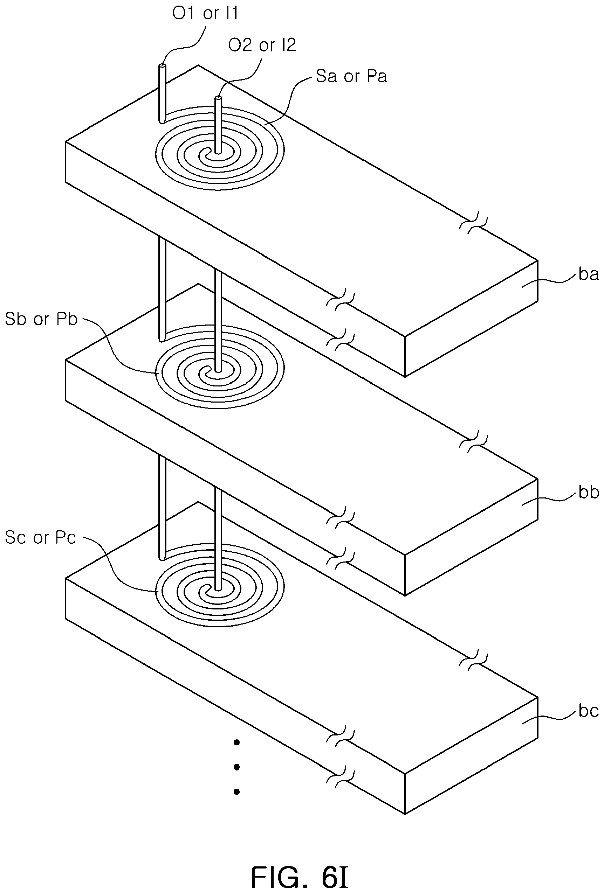

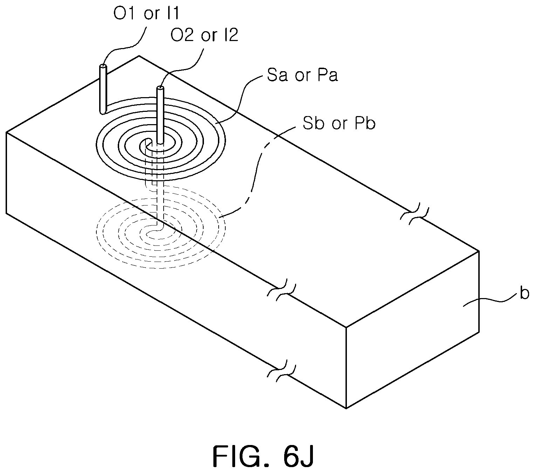

Meanwhile, as illustrated in FIG. 6I, at least one primary coil P or at least one secondary coil S (Pa, Pb, Pc or Sa, Sb, Sc) may be dividedly formed in a plurality of boards ba, bb, and bc. As illustrated in FIG. 6J, at least one primary coil P or at least one secondary coil S (Pa, Pb or Sa, Sb) may be dividedly formed on one surface and in the other surface of a single board b. Here, the divided coils may be connected through a via formed within the board b for the divided formation of the coils, to form a single coil.

As set forth above, since a coreless transformer used for power conversion is employed in a power supply device, a volume of the transformer may be reduced. Since input power is switched in an interleaved manner, capacitance of an input/output electrolytic capacitor may be reduced or it may be omitted, and thus, a size of a product may be further reduced and manufacturing costs may be reduced.

The Scope of the invention is only defined by the appended claims and any example not being an embodiment of the invention thus defined shall be regarded only for illustrating purposes.

## Claims

1. A coreless transformer (111), comprising:
a plurality of primary coils (P, P1, P2, Pa, Pb, Pc) delivering power;
at least one secondary coil (S, Sa, Sb, Sc) spaced apart from the plurality of primary coils (P, P1, P2, Pa, Pb, Pc) and converting power from the plurality of primary coils (P, P1, P2, Pa, Pb, Pc); and
wherein a power conversion ratio is determined based on the distance between the plurality of primary coils (P, P1, P2, Pa, Pb, Pc) and the at least one secondary coil (S, Sa, Sb, Sc) ;
the coreless transformer further comprising a support unit (b) maintaining a distance between the plurality of primary coils (P, P1, P2, Pa, Pb, Pc) and the at least one secondary coil (S, Sa, Sb, Sc); wherein
magnetic flux from the plurality of primary coils (P, P1, P2, Pa, Pb, Pc) is transferred to at least one secondary coil (S, Sa, Sb, Sc), and wherein the winding area of the at least one secondary coil (S, Sa, Sb, Sc) is equal to or greater than the winding area of the plurality of primary coils (P, P1, P2, Pa, Pb, Pc).

2. The coreless transformer (111) of claim 1, wherein the support unit (b) includes the plurality of primary coils (P, P1, P2, Pa, Pb, Pc) and the at least one secondary coil (S, Sa, Sb, Sc) therein.

3. The coreless transformer (111) of claim 2, wherein the support unit (b) further includes at least one magnetic sheet (MS, MS1, MS2, MS3, MS4) formed between a plurality of primary coils (P, P1, P2, Pa, Pb, Pc) and at least one secondary coil (S, Sa, Sb, Sc) in order to prevent leakage of magnetic flux.

4. The coreless transformer (111) of claim 1, wherein each of the plurality of primary coils (P1, P2; Pa, Pb, Pc) is respectively disposed at a same distance from the at least one secondary coil (S, Sa, Sb, Sc).

5. The coreless transformer (111) of claim 1, wherein the support unit (b) includes at least one board (b, b1, b2, ba, bb, bc), and the plurality of primary coils (P; P1, P2, Pa, Pb, Pc) is disposed on one surface of the at least one board (b; b1, b2; ba, bb, bc), and the at least one secondary coil (S, Sa, Sb, Sc) is disposed in another surface, opposing the one surface of the at least one board (b, b1, b2, ba, bb, bc).

6. The coreless transformer (111) of claim 1, wherein the support unit (b) includes a first board (b1) and a second board (b2) laminated on the first board (b1), and the plurality of primary coils (P, P1, P2, Pa, Pb, Pc) is disposed on one surface of the first board (b1) and the at least one secondary coil (S, Sa, Sb, Sc) is disposed on one surface of the second board (b2).

7. The coreless transformer (111) of claim 6, wherein the at least one magnetic sheet (MS, MS1, MS2, MS3, MS4) is disposed between the first board (b1) and the second board (b2) and suppresses leakage of magnetic flux transmitted from the plurality of primary coil (P, P1, P2, Pa, Pb, Pc) to the at least one secondary coil (S, Sa, Sb, Sc).

8. The coreless transformer (111) of claim 6, wherein the support unit further includes a molding part (m) fixing the first board (b1) and the second board (b2).

9. The coreless transformer (111) of claim 1, wherein a direction in which a lead wire (I1, 12; I1, 12, 13, 14) of the plurality of primary coils (P, P1, P2, Pa, Pb, Pc) is led out and a direction in which a lead wire (O1, O2) of the at least one secondary coil (S, Sa, Sb, Sc) is led out are opposite to each other.

10. The coreless transformer (111) of claim 1, wherein the support unit (b) includes a plurality of boards (b, b1, b2, ba, bb, bc), and the plurality of primary coils (P, P1, P2, Pa, Pb, Pc) is dividedly disposed such that a first divided portion (P1) of the plurality of primary coils (P, P1, P2, Pa, Pb, Pc) is disposed in a first portion of the plurality of boards (b, b1, b2, ba, bb, bc) and a second divided portion (P2) of the plurality of primary coils (P, P1, P2, Pa, Pb, Pc) is disposed in a second portion of the plurality of boards.

11. The coreless transformer (111) of claim 1, wherein the support unit (b) includes a plurality of boards (b, b1, b2, ba, bb, bc), and the at least one secondary coil (S, Sa, Sb, Sc) is dividedly disposed such that a first divided portion (Sa) of the at least one secondary coil (S, Sa, Sb, Sc) is disposed in a first portion of the plurality of boards and a second divided portion (Sb) of the at least one secondary coil (S, Sa, Sb, Sc) is disposed in a second portion of the plurality of boards (b, b1, b2, ba, bb, bc).

12. The coreless transformer (111) of claim 1, wherein the support unit (b) includes a first board (b1) and a second board (b2) laminated on the first board (b1), and the plurality of primary coils (P, P1, P2, Pa, Pb, Pc) is dividedly disposed on one surface and another surface of the first board (b1), and the at least one secondary coil (S, Sa, Sb, Sc) is dividedly disposed on one surface and another surface of the second board (b2).

## Patentansprüche

1. Ein kernloser Transformator (111), umfassend:
eine Vielzahl primärer Spulen (P, P1, P2, Pa, Pb, Pc), die Strom liefern;
mindestens eine sekundäre Spule (S, Sa, Sb, Sc), die von der Vielzahl primärer Spulen (P, P1, P2, Pa, Pb, Pc) räumlich getrennt ist und Strom von der Vielzahl primärer Spulen (P, P1, P2, Pa, Pb, Pc) umwandelt;
und wobei ein Strom-Wandlungsverhältnis basierend auf der Entfernung zwischen der Vielzahl primärer Spulen (P, P1, P2, Pa, Pb, Pc) und der mindestens einen sekundären Spule (S, Sa, Sb, Sc) ermittelt wird;
wobei der kernlose Transformator weiterhin eine Trägereinheit (b) umfasst, die eine Entfernung zwischen der Vielzahl primärer Spulen (P, P1, P2, Pa, Pb, Pc) und der mindestens einen sekundären Spule (S, Sa, Sb, Sc) aufrechterhält;
wobei magnetischer Fluss der Vielzahl primärer Spulen (P, P1, P2, Pa, Pb, Pc) auf mindestens eine sekundäre Spule (S, Sa, Sb, Sc) übertragen wird, und
wobei der Wicklungsbereich der mindestens einen sekundären Spule (S, Sa, Sb, Sc) gleich oder größer ist, als der Wicklungsbereich der Vielzahl primärer Spulen (P, P1, P2, Pa, Pb, Pc).

2. Der kernlose Transformator (111) nach Anspruch 1, wobei die Trägereinheit (b) darin die Vielzahl primärer Spulen (P, P1, P2, Pa, Pb, Pc) und die mindestens eine sekundäre Spule (S, Sa, Sb, Sc) enthält.

3. Der kernlose Transformator (111) nach Anspruch 2, wobei die Trägereinheit (b) weiterhin mindestens ein magnetisches Blech (MS, MS1, MS2, MS3, MS4) enthält, zwischen einer Vielzahl primärer Spulen (P, P1, P2, Pa, Pb, Pc) und mindestens einer sekundären Spule (S, Sa, Sb, Sc) gebildet, um Verlust des magnetischen Flusses zu verhindern.

4. Der kernlose Transformator (111) nach Anspruch 1, wobei jede der Vielzahl primärer Spulen (P1, P2; Pa, Pb, Pc) jeweils in einer gleichen Entfernung von der mindestens einen sekundären Spule (S, Sa, Sb, Sc) angeordnet ist.

5. Der kernlose Transformator (111) nach Anspruch 1, wobei die Trägereinheit (b) mindestens eine Platte (b, b1, b2, ba, bb, bc) enthält, und die Vielzahl primärer Spulen (P; P1, P2, Pa, Pb, Pc) auf einer Oberfläche der mindestens einen Platte (b; b1, b2; ba, bb, bc) angeordnet ist, und die mindestens eine sekundäre Spule (S, Sa, Sb, Sc) auf einer anderen Oberfläche angeordnet ist, die der einen Oberfläche der mindestens einen Platte (b, b1, b2, ba, bb, bc) gegenüberliegt.

6. Der kernlose Transformator (111) nach Anspruch 1, wobei die Trägereinheit (b) eine erste Platte (b1) und eine auf die erste Platte (b1) laminierte, zweite Platte (b2) enthält, und die Vielzahl primärer Spulen (P, P1, P2, Pa, Pb, Pc) auf einer Oberfläche der ersten Platte (b1) angeordnet ist, und die mindestens eine sekundäre Spule (S, Sa, Sb, Sc) auf einer Oberfläche der zweiten Platte (b2) angeordnet ist.

7. Der kernlose Transformator (111) nach Anspruch 6, wobei das mindestens eine magnetische Blech (MS, MS1, MS2, MS3, MS4) zwischen der ersten Platte (b1) und der zweiten Platte (b2) angeordnet ist und Verlust von magnetischem Fluss, der von der Vielzahl primärer Spulen (P, P1, P2, Pa, Pb, Pc) zu der mindestens einen sekundären Spule (S, Sa, Sb, Sc) übertragen wird, unterdrückt.

8. Der kernlose Transformator (111) nach Anspruch 6, wobei die Trägereinheit weiterhin ein Formteil (m) enthält, das die erste Platte (b1) und die zweite Platte (b2) befestigt.

9. Der kernlose Transformator (111) nach Anspruch 1, wobei eine Richtung, in die ein Zuleitungsdraht (I1, I2; I1, I2, I3, I4) der Vielzahl primärer Spulen (P, P1, P2, Pa, Pb, Pc) herausgeführt wird, und eine Richtung, in die ein Zuleitungsdraht (O1, O2) von der mindestens einen sekundären Spule (S, Sa, Sb, Sc) herausgeführt wird, einander entgegengesetzt sind.

10. Der kernlose Transformator (111) nach Anspruch 1, wobei die Trägereinheit (b) eine Vielzahl von Platten (b, b1, b2, ba, bb, bc) enthält, und die Vielzahl primärer Spulen (P, P1, P2, Pa, Pb, Pc) so aufgeteilt angeordnet ist, dass ein erster aufgeteilter Teil (P1) der Vielzahl primärer Spulen (P, P1, P2, Pa, Pb, Pc) in einem ersten Teil der Vielzahl von Platten (b, b1, b2, ba, bb, bc) angeordnet ist, und ein zweiter aufgeteilter Teil (P2) der Vielzahl primärer Spulen (P, P1, P2, Pa, Pb, Pc) in einem zweiten Teil der Vielzahl von Platten angeordnet ist.

11. Der kernlose Transformator (111) nach Anspruch 1, wobei die Trägereinheit (b) eine Vielzahl von Platten (b, b1, b2, ba, bb, bc) enthält, und die mindestens eine sekundäre Spule (S, Sa, Sb, Sc) so aufgeteilt angeordnet ist, dass ein erster aufgeteilter Teil (Sa) der mindestens einen sekundären Spule (S, Sa, Sb, Sc) in einem ersten Teil der Vielzahl von Platten angeordnet ist, und ein zweiter aufgeteilter Teil (Sb) der mindestens einen sekundären Spule (S, Sa, Sb, Sc) in einem zweiten Teil der Vielzahl von Platten (b, b1, b2, ba, bb, bc) angeordnet ist.

12. Der kernlose Transformator (111) nach Anspruch 1, wobei die Trägereinheit (b) eine erste Platte (b1) und eine auf die erste Platte (b1) laminierte, zweite Platte (b2) enthält, und die Vielzahl primärer Spulen (P, P1, P2, Pa, Pb, Pc) auf einer Oberfläche und einer anderen Oberfläche der ersten Platte (b1) aufgeteilt angeordnet ist, und die mindestens eine sekundäre Spule (S, Sa, Sb, Sc) auf einer Oberfläche und einer anderen Oberfläche der zweiten Platte (b2) aufgeteilt angeordnet ist.

## Revendications

1. Transformateur sans noyau (111), comprenant :
une pluralité de bobines primaires (P, P1, P2, Pa, Pb, Pc) délivrant de la puissance ;
au moins une bobine secondaire (S, Sa, Sb, Sc) espacée de la pluralité de bobines primaires (P, P1, P2, Pa, Pb, Pc) et convertissant de la puissance provenant de la pluralité de bobines primaires (P, P1, P2, Pa, Pb, Pc) ; et
dans lequel un rapport de conversion de puissance est déterminé d'après la distance entre la pluralité de bobines primaires (P, P1, P2, Pa, Pb, Pc) et l'au moins une bobine secondaire (S, Sa, Sb, Sc) ;
le transformateur sans noyau comprenant en outre
une unité de support (b) maintenant une distance entre la pluralité de bobines primaires (P, P1, P2, Pa, Pb, Pc) et l'au moins une bobine secondaire (S, Sa, Sb, Sc) ; dans lequel
un flux magnétique provenant de la pluralité de bobines primaires (P, P1, P2, Pa, Pb, Pc) est transféré à au moins une bobine secondaire (S, Sa, Sb, Sc), et
dans lequel l'aire d'enroulement de l'au moins une bobine secondaire (S, Sa, Sb, Sc) est supérieure ou égale à l'aire d'enroulement de la pluralité de bobines primaires (P, P1, P2, Pa, Pb, Pc).

2. Transformateur sans noyau (111) selon la revendication 1, dans lequel l'unité de support (b) comporte la pluralité de bobines primaires (P, P1, P2, Pa, Pb, Pc) et l'au moins une bobine secondaire (S, Sa, Sb, Sc) à l'intérieur.

3. Transformateur sans noyau (111) selon la revendication 2, dans lequel l'unité de support (b) comporte en outre au moins une feuille magnétique (MS, MS1, MS2, MS3, MS4) formée entre une pluralité de bobines primaires (P, P1, P2, Pa, Pb, Pc) et au moins une bobine secondaire (S, Sa, Sb, Sc) afin d'empêcher une fuite de flux magnétique.

4. Transformateur sans noyau (111) selon la revendication 1, dans lequel chacune de la pluralité de bobines primaires (P1, P2 ; Pa, Pb, Pc) est disposée respectivement à une même distance de l'au moins une bobine secondaire (S, Sa, Sb, Sc).

5. Transformateur sans noyau (111) selon la revendication 1, dans lequel l'unité de support (b) comporte au moins un panneau (b, b1, b2, ba, bb, bc) et la pluralité de bobines primaires (P ; P1, P2, Pa, Pb, Pc) est disposée sur une surface de l'au moins un panneau (b ; b1, b2 ; ba, bb, bc), et l'au moins une bobine secondaire (S, Sa, Sb, Sc) est disposée dans une autre surface, opposée à la surface de l'au moins un panneau (b, b1, b2, ba, bb, bc).

6. Transformateur sans noyau (111) selon la revendication 1, dans lequel l'unité de support (b) comporte un premier panneau (b1) et un second panneau (b2) stratifié sur le premier panneau (b1), et la pluralité de bobines primaires (P, P1, P2, Pa, Pb, Pc) est disposée sur une surface du premier panneau (b1) et l'au moins une bobine secondaire (S, Sa, Sb, Sc) est disposée sur une surface du second panneau (b2).

7. Transformateur sans noyau (111) selon la revendication 6, dans lequel l'au moins une feuille magnétique (MS, MS1, MS2, MS3, MS4) est disposée entre le premier panneau (b1) et le second panneau (b2) et supprime une fuite de flux magnétique transmis de la pluralité de bobines primaires (P, P1, P2, Pa, Pb, Pc) à l'au moins une bobine secondaire (S, Sa, Sb, Sc).

8. Transformateur sans noyau (111) selon la revendication 6, dans lequel l'unité de support comporte en outre une partie de moulage (m) fixant le premier panneau (b1) et le second panneau (b2).

9. Transformateur sans noyau (111) selon la revendication 1, dans lequel une direction dans laquelle un fil de sortie (I1, I2 ; I1, I2, I3, I4) de la pluralité de bobines primaires (P, P1, P2, Pa, Pb, Pc) est sorti et une direction dans laquelle un fil de sortie (O1, O2) de l'au moins une bobine secondaire (S, Sa, Sb, Sc) est sorti sont opposées l'une à l'autre.

10. Transformateur sans noyau (111) selon la revendication 1, dans lequel l'unité de support (b) comporte une pluralité de panneaux (b, b1, b2, ba, bb, bc), et la pluralité de bobines primaires (P, P1, P2, Pa, Pb, Pc) est disposée de façon divisée de sorte qu'une première portion divisée (P1) de la pluralité de bobines primaires (P, P1, P2, Pa, Pb, Pc) soit disposée dans une première portion de la pluralité de panneaux (b, b1, b2, ba, bb, bc) et une seconde portion divisée (P2) de la pluralité de bobines primaires (P, P1, P2, Pa, Pb, Pc) soit disposée dans une seconde portion de la pluralité de panneaux.

11. Transformateur sans noyau (111) selon la revendication 1, dans lequel l'unité de support (b) comporte une pluralité de panneaux (b, b1, b2, ba, bb, bc), et l'au moins une bobine secondaire (S, Sa, Sb, Sc) est disposée de façon divisée de sorte qu'une première portion divisée (Sa) de l'au moins une bobine secondaire (S, Sa, Sb, Sc) soit disposée dans une première portion de la pluralité de panneaux et une seconde portion divisée (Sb) de l'au moins une bobine secondaire (S, Sa, Sb, Sc) soit disposée dans une seconde portion de la pluralité de panneaux (b, b1, b2, ba, bb, bc).

12. Transformateur sans noyau (111) selon la revendication 1, dans lequel l'unité de support (b) comporte un premier panneau (b1) et un second panneau (b2) stratifié sur le premier panneau (b1), et la pluralité de bobines primaires (P, P1, P2, Pa, Pb, Pc) est disposée de façon divisée sur une surface et une autre surface du premier panneau (b1), et l'au moins une bobine secondaire (S, Sa, Sb, Sc) est disposée de façon divisée sur une surface et une autre surface du second panneau (b2).
